(19) Europäisches Patentamt
European Patent Office
Office européen des brevets

(11) **EP 2 178 144 A1**

(12) **EUROPÄISCHE PATENTANMELDUNG**

(43) Veröffentlichungstag:
**21.04.2010 Patentblatt 2010/16**

(51) Int Cl.:
*H01M 8/02* (2006.01)          *H01M 8/10* (2006.01)
*C25B 1/08* (2006.01)          *H01M 8/18* (2006.01)
*H01M 4/86* (2006.01)

(21) Anmeldenummer: **09172385.8**

(22) Anmeldetag: **07.10.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **16.10.2008  CH 16322008**

(71) Anmelder: **Schmidlin Labor + Service AG**
**6345 Neuheim (CH)**

(72) Erfinder:
• **Schmidlin, Heinz P.**
  **6345, Neuheim (CH)**
• **Frischknecht, Roland**
  **5643, Sins (CH)**

(74) Vertreter: **OK pat AG**
**Chamerstrasse 50**
**6300 Zug (CH)**

(54) **Elektrolyse- beziehungsweise Brennstoff-Zelle und Verwendung der Elektrolyse- beziehungsweise Brennstoff-Zelle**

(57)    Elektrolyse- beziehungsweise Brennstoff-Zelle (12), umfassend eine Anode (102), eine Kathode (104), und eine Membrane (100), die zwischen der Anode (102) und der Kathode (104) angeordnet ist. Die Anode (102) weist eine anodenseitige Scheibe aus Titanvlies (106) und die Kathode (104) eine kathodenseitige Scheibe aus Titanvlies (108) auf. Die Membrane (100) ist zwischen den beiden Titanvliesen (106, 108) angeordnet. Die anodenseitige Scheibe aus Titanvlies (106) ist elektrisch leitend mit der Kontaktseite (102.1) der Anode (102) und die kathodenseitige Scheibe aus Titanvlies (108) ist elektrisch leitend mit der Kontaktseite (104.1) der Kathode (104) verbunden.

<u>12</u>

**Fig. 2**

**Beschreibung**

Die Erfindung betrifft eine Elektrolyse- beziehungsweise Brennstoff-Zelle nach dem Oberbegriff des Anspruchs 1 und eine Verwendung der Elektrolysebeziehungsweise Brennstoff-Zelle nach dem Oberbegriff des Anspruchs 12 beziehungsweise 13.

Zur Durchführung zahlreicher physikalischer und chemischer Prozesse wird vielerorts Wasserstoff in Form von $H_2$ benötigt. Bei Wasserstoff handelt es sich um ein chemisches Element, das in der Natur kaum in reiner Form, aber in grossen Mengen in Verbindungen vorkommt, insbesondere natürlich in Wasser, das heisst in $H_2O$. Wasserstoff wird daher im Allgemeinen aus Wasser gewonnen, wofür verschiedene Verfahren bekannt sind.

Seit einiger Zeit erfolgt die Gewinnung von Wasserstoff oft auf nasschemischem, physikalischem Weg, beziehungsweise durch Elektrolyse, wobei Wasser in Wasserstoff und Sauerstoff gespalten wird nach der Formel

$$2\ H_2O = 2\ H_2 + O_2.$$

Hierbei fällt natürlich nicht nur Wasserstoff sondern auch Sauerstoff an, so dass dieses Verfahren zur Gewinnung von Wasserstoff auch als Verfahren zur Gewinnung von Sauerstoff betrachtet werden kann.

Um Nachteile zu vermeiden, die bei einer zentralen, grosstechnischen Herstellung von Wasserstoff und bei dessen Verteilung und Lagerung in Wasserstoff-Behältern auftreten, wird Wasserstoff seit einiger Zeit direkt beim Verbraucher und nur in den jeweils benötigten Mengen erzeugt. Hierzu werden wasserstoff-generierende Geräte, die gelegentlich auch als Wasserstoff-Generatoren bezeichnet werden, verwendet. Mit solchen Geräten kann der Wasserstoff nach dem Prinzip der Elektrolyse, also nach Formel (1), aus Wasser gewonnen werden. Der gleichzeitig entstehende Sauerstoff entweicht im Allgemeinen in die Umgebung.

Solche wasserstoff-generierenden Einrichtungen weisen als zentrale Einheit eine Elektrolyse-Zelle auf, in welcher sich die eigentliche chemische/physikalische Reaktion abspielt, welche durch die weiter oben erwähnte Formel (1) beschrieben wird. Diese Reaktion kann allerdings nicht nur in einer Richtung, in der durch Elektrolyse Wasserstoff generiert wird, sondern alternativ auch in der entgegengesetzten Richtung ablaufen. Läuft die Reaktion in der entgegengesetzten Richtung ab, so findet keine Elektrolyse statt. Aus diesem Grunde wurde die herkömmlicherweise als Elektrolyse-Zelle bezeichnete Zelle in der vorliegenden Beschreibung auch als Elektrolyse- beziehungsweise Brennstoff-Zelle oder vereinfacht nur als Zelle bezeichnet.

Läuft die Reaktion als Elektrolyse ab, wobei Wasser in Wasserstoff und Sauerstoff zerlegt wird, so handelt es sich um eine Reaktion, die nur unter Aufwendung von Energie, im vorliegenden Falle unter Aufwendung elektrischer Energie, ablaufen kann. Zwischen den Elektroden, welche in der Zelle angeordnet sind, muss dabei zur Lieferung der benötigten Energie eine Spannung angelegt werden. In diesem Falle wirkt die Zelle als Elektrolyse-Zelle beziehungsweise als Wasserstoff-Erzeuger.

Läuft die Reaktion in der umgekehrten Richtung ab, wobei aus Wasserstoff und Sauerstoff Wasser gebildet wird, so handelt es sich um eine Reaktion, die sich unter Abgabe von Energie, im vorliegenden Falle unter Abgabe von elektrischer Energie abspielt. Wird also die Zelle mit Sauerstoff und mit Wasserstoff beschickt, so verbinden sich Sauerstoff und Wasserstoff und an den Elektroden der Zelle kann eine Spannung abgegriffen werden. In diesem Falle wirkt die Zelle als Brennstoff-Zelle.

Bekannt sind Elektrolyse-Zellen mit einem Aufbau und einer Wirkungsweise, die im folgenden mit Bezug auf eine Elektrolyse von Wasser unter Aufnahme elektrischer Energie beschrieben wird, obwohl, wie eben erwähnt, solche Zellen auch zur Synthese von Wasser unter gleichzeitiger Abgabe von elektrischer Energie benutzt werden können. Eine herkömmliche Elektrolyse-Zelle weist wie üblich ein Gehäuse aus mehreren Gehäuseteilen, gegebenenfalls mit Dichtfolien belegt, auf, ferner zwei Elektroden, nämlich eine positive Anode und eine negative Kathode. Die Elektroden sind plattenförmig und an jeder Elektrode sind, auf der der gegenüberliegenden Elektrode zugewandten Fläche, mehrere gegenseitig aneinanderliegende beziehungsweise miteinander verbundene gitter- beziehungsweise wabenartig ausgebildete Netze angeordnet. Durch diese Netze wird eine Struktur mit Hohlräumen gebildet. Diese Hohlräume bilden einen vielfach verzweigten Strömungskanal; wobei die sich ergebende Kapillarwirkung die Fluidverteilung über die ganze Fläche garantiert. Die beteiligten Fluide bestehen aus Wasser als Ausgangsstoff, Wasserstoff als zu erzeugendem Produkt und Sauerstoff gewissermassen als Abfallprodukt. Allerdings wird im Allgemeinen nicht das gesamte zugeführte Wasser in Wasserstoff und Sauerstoff zerlegt, so dass das Produkt aus einem Wasserstoff/Wasser-Gemisch und das Abfallprodukt aus einem Sauerstoff/Wasser-Gemisch bestehen kann. Zwischen den gitterbeziehungsweise wabenartigen Netzen einerseits der Kathode und anderseits der Anode ist eine beschichtete Membrane angeordnet, welche für Wasserstoffmoleküle $H_2$ und für Wassermoleküle $H_2O$ durchlässig, für Sauerstoffmoleküle $O_2$ aber undurchlässig ist. Infolge der zwischen der Kathode und der Anode angelegten Spannung wird ein Teil des Wassers in Wasserstoff und Sauerstoff zerlegt, während der Rest des Wassers nicht zerlegt wird. Vor, während und nach dem Zerlegungsvorgang des Wassers strömen die beteiligten Fluide durch die Hohlräume der gitter- beziehungsweise wabenartigen Netze. Hierbei strömen Wasser und entstehender Sauerstoff durch die Hohlräume der gitter- beziehungsweise wabenartigen Netze auf der der Anode zugewandten Membranseite. Gleichzeitig dringt Wasser durch die Membrane auf die der Kathode zugewandte Membranseite, ebenso bei der Membrane entstandener Wasserstoff. Restliches Wasser und der entstandene Wasserstoff strömen dann durch die Hohlräume der gitter- beziehungsweise wabenartigen Netze auf der der Kathode zugewandten Membranseite. Schliesslich verlassen der Sauerstoff und restliches Wasser den Raum zwischen der Anode und der Membrane bei einem Sauerstoff/Wasser-Anschluss, während der Wasserstoff und weiteres restliches Wasser den Raum zwischen der Kathode und der Membrane bei einem Wasserstoff/Wasser-Anschluss verlassen. Wird der Wasserstoff $H_2$ in ein abgeschlossenes System geführt, so lässt sich ein Druck aufbauen.

Die oben beschriebene Elektrolyse-Zelle weist zahlreiche Nachteile auf, von denen die wichtigsten im Folgenden beschrieben werden.

Erstens kommt es häufig vor, dass die Membrane unter dem herrschenden Druck in die Hohlräume mit einer Struktur versehen, beziehungsweise in die gitter- oder wabenartigen Netze gepresst wird und durch die Berandung der Hohlräume beziehungsweise die gitter- oder wabenartige Struktur beschädigt wird, was zur Folge hat, dass die Elektrolyse nicht wie beabsichtigt ablaufen kann.

Zweitens ist der Aufbau der Elektrolyse-Zelle verhältnismässig kompliziert und dadurch aufwändig, da sie eine Vielzahl von Bestandteilen aufweist, nämlich das bisher nicht erwähnte Gehäuse mit den Anschlüssen für den Wasser-Eintritt, den Sauerstoff-Austritt und den Wasserstoff/Wasser-Austritt, die Anode, die Kathode und die Membrane. Die zahlreichen Bestandteile haben zur Folge, dass innerhalb der Elektrolyse-Zelle eine Vielzahl von Kontaktstellen vorhanden ist beziehungsweise sein sollte, was herstellungstechnisch und funktionell unvorteilhaft ist.

Drittens ist die Lebensdauer der Elektrolyse-Zelle verhältnismässig gering, weil der weitaus beschädigungsanfälligste Bestandteil, nämlich die Membrane, nicht ersetzt werden kann. Ein Ersatz der Membrane wäre infolge der zahlreichen Bestandteile der Elektrolyse-Zelle ohnehin umständlich und ist insbesondere deshalb unmöglich, weil zur Erzeugung der notwendigen absoluten Dichtheit des Gehäuses nicht nur Gummi- oder Kunststoffdichtungskörper sondern auch Silikonmasse verwendet wird, welche bei einer Demontage die einzelnen Bestandteile in einem derart verschmutzten Zustand zurücklässt, dass deren Weiterverwendung praktisch nicht in Frage kommt.

Viertens ist die von der durch das Zusammensetzen der verschiedenen Bestandteile der Elektrolyse-Zelle erzeugte Kraft auf die Membrane nur schwer kontrollierbar und nicht mit genügender Genauigkeit reproduzierbar.

Fünftens besteht die Gefahr, dass die gitter- beziehungsweise wabenartigen Netze unter dem notwendigerweise herrschenden Druck die an sie grenzenden Flächen der Elektroden, welche die eigentlichen Elektroden-Wirkflächen sind, deformieren oder allfällige Beschichtungen dieser Elektroden-Wirkflächen beschädigen.

Es gibt eine Elektrolyse- beziehungsweise Brennstoff-Zelle der Firma Schmidlin Labor + Service AG, Schweiz, die unter dem Namen Elektrolysezelle angeboten wird. Diese Elektrolyse- beziehungsweise Brennstoff-Zelle hat einen Grossteil der genannten Nachteile beseitigt und hat sich daher sehr bewährt hat. Diese Elektrolyse- beziehungsweise Brennstoff-Zelle ist in der publizierten europäischen Patentanmeldung EP 1 077 499 beschrieben. Die entsprechende Elektrolyse- beziehungsweise Brennstoff-Zelle weist nur wenige Bestandteile auf, nämlich zwei scheibenähnliche Gehäuseteile, zwei Elektroden mit Wirkflächen und eine beschichtete Membrane, sowie einige wenige Dichtungskörper. Es werden jedoch keine Dichtungsmassen und keine gitter- beziehungsweise wabenartigen Netze als Struktur gebraucht. Die Wirkflächen der Anode und der Kathode liegen direkt an der beschichteten Membrane an und die Struktur, welche die Strömungskanäle bildet und welche herkömmlicherweise durch die gitterbeziehungsweise wabenartigen Netze gebildet wurde, ist integral an der Wirkfläche mindestens einer der Elektroden ausgebildet.

Zusammenfassend muss festgestellt werden, dass die vorbekannten Zellen teilweise kompliziert und aufwendig sind.

Demzufolge ist es Aufgabe der Erfindung,

- eine Elektrolyse- beziehungsweise Brennstoff-Zelle der eingangs genannten Art zu schaffen, der die erwähnten Nachteile nicht aufweist,
- eine Verwendung der neuen Elektrolyse- beziehungsweise Brennstoff-Zelle aufzuzeigen.

Die Lösung dieser Aufgabe erfolgt erfindungsgemäss

- für die Elektrolyse- beziehungsweise Brennstoff-Zelle durch die Merkmale des kennzeichnenden Teils des Anspruchs 1, und
- für die Verwendung durch die Merkmale des kennzeichnenden Teils des Anspruchs 12 beziehungsweise 13.

Vorteilhafte Weiterbildungen der erfindungsgemässen Elektrolysebeziehungsweise Brennstoff-Zelle sind durch die abhängigen Ansprüche 2 bis 11 definiert.

Die neue Elektrolyse- beziehungsweise Brennstoff-Zelle wird im Weiteren nur als Elektrolyse-Zelle bezeichnet, worunter aber auch Zellen mit Wirkung als Brennstoff-Zellen verstanden werden sollen. Die Elektrolyse-Zelle ist einfach in ihrer Herstellung und sicher in ihrer Funktion, da sie nur sehr wenige Bestandteile umfasst, nämlich eine Anode, eine Kathode, und eine Membrane, die zwischen der Anode und der Kathode angeordnet ist. Die Anode weist ein anodenseitiges Titanvlies auf, das auf einer Kontaktseite der Anode angeordnet ist. Die Kathode umfasst eine kathodenseitiges Titanvlies auf, das auf einer Kontaktseite der Kathode angeordnet ist. Die Membrane liegt zwischen den beiden Titanvliesen. Das anodenseitige Titanvlies ist elektrisch leitend mit der Kontaktseite der Anode und das kathodenseitige Titanvlies ist elektrisch leitend mit der Kontaktseite der Kathode verbunden.

Da bei der neuen Elektrolyse-Zelle die gitter- beziehungsweise wabenartigen Netze herkömmlicher Elektrolyse-Zellen nicht vorhanden sind, besteht keine Beschädigungsgefahr für die Wirkflächen der Elektroden.

Die neuen Elektroden weisen Kontaktseiten als Wirkflächen auf, die durch die Titanvliese belegt/gebildet sind. Durch den Einsatz der Titanvliese wird einerseits die Kapillarwirkung in vollem Masse gewährleistet und andererseits ist die Gefahr deutlich reduziert, dass durch die Oberflächenstruktur der Kontaktseiten die Membrane beschädigt wird, da die Titanvliese die Kontaktseiten der Elektroden räumlich von der Membrane trennen.

Sollte sich dennoch die Notwendigkeit ergeben, die Membrane auszutauschen, so ist dies dank dem einfachen Aufbau der Elektrolyse-Zelle und dem Fehlen von verschmutzenden Dichtmassen problemlos möglich.

Die spezielle Anordnung mit zwei Titanvliesen erlaubt es auch, die zum Zusammenspannen der Gehäuseteile auszuübende Kraft beziehungsweise den Druck auf die Kontaktseiten der Elektroden und die Membrane genau und reproduzierbar festzulegen. Die Titanvliese wirken hier wie eine Art Zwischenschicht, die punktuelle Druckpunkte reduziert oder ausgleicht, die ansonsten auf die Membrane wirken könnten.

Weitere Eigenschaften und Vorteile der Erfindung werden im Folgenden anhand eines Ausführungsbeispiels der erfindungsgemässen Elektrolyse-Zelle und mit Bezug auf die Zeichnung ausführlich beschrieben. Es zeigen:

**Fig. 1** eine Anlage mit einer Elektrolyse-Zelle nach der Erfindung, in schematischer Darstellung;

**Fig. 2** eine Elektrolyse-Zelle nach der Erfindung, in vereinfachter, schematischer, nicht massstäblicher Darstellung;

**Fig. 3** eine Elektrolyse-Zelle nach der Erfindung, in massstäblicher Darstellung;

**Fig. 4A** eine Elektrode nach der Erfindung, in einem ersten Schnitt;

**Fig. 4B** die Elektrode von Fig. 4A, in einem zweiten Schnitt;

**Fig. 4C** einen vergrösserten Teil der Elektrode von Fig. 4A, in einem dritten Schnitt;

**Fig. 4D** die Elektrode von Fig. 4A, in einer Draufsicht;

**Fig. 5A** eine weitere Elektrode nach der Erfindung, in einem ersten Schnitt;

**Fig. 5B** die Elektrode von Fig. 5A, in einem zweiten Schnitt;

**Fig. 5C** die Elektrode von Fig. 5A, in einer Draufsicht.

Detaillierte Beschreibung

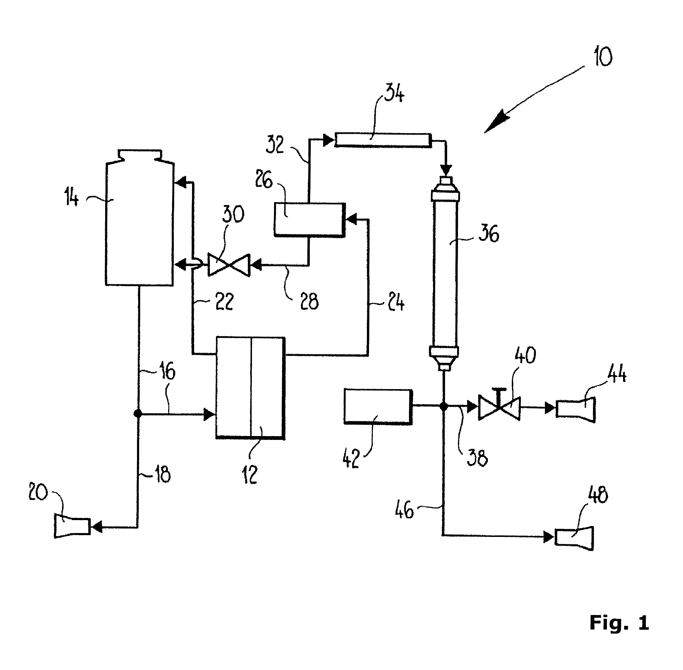

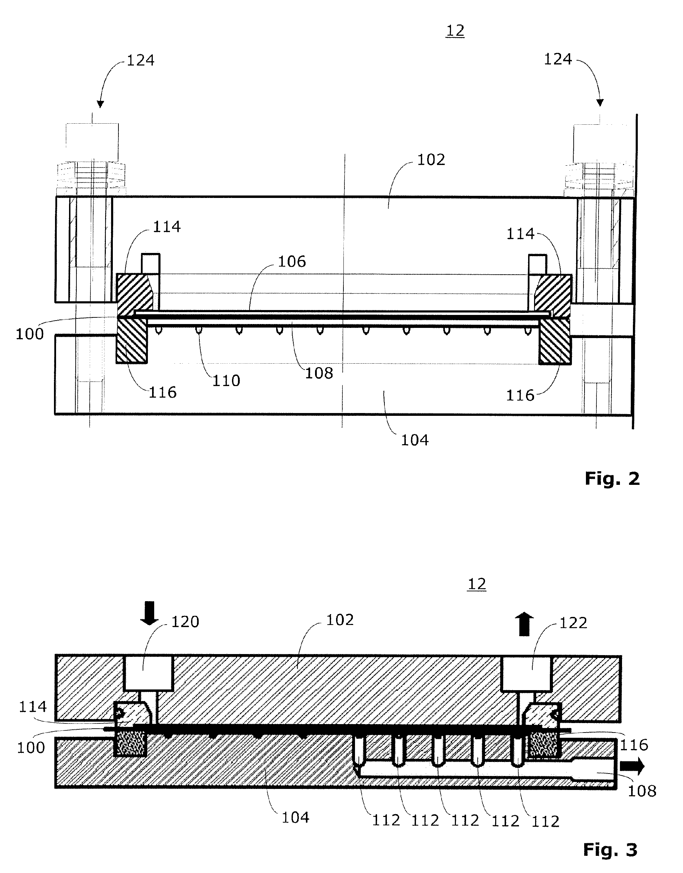

Die in Fig. 1 dargestellte Anlage 10 dient zur Erzeugung von Wasserstoff aus Wasser durch ein Elektrolyse-Verfahren und weist als zentrale Einheit eine Elektrolyse-Zelle 12 nach der Erfindung auf. Aus einem Wassertank 14 gelangt das Wasser, das den Rohstoff für das Elektrolyse-Verfahren bildet, über eine Wasser-Zufuhrleitung 16 in die Elektrolyse-Zelle 12. Die Wirkungsweise der Elektrolyse-Zelle 12 wird weiter unten und insbesondere mit Bezug auf Fig. 2 genauer beschrieben. Eine Zweigleitung 18 der Wasser-Zufuhrleitung 14 führt zu einer Drainage-Öffnung 20. In der Elektrolyse-Zelle 12 wird ein Teil des Wassers in Wasserstoff und Sauerstoff gespalten, der Rest des Wassers bleibt erhalten. Über eine Sauerstoff/Wasser-Rückführleitung 22 gelangt ein Gemisch, bestehend aus restlichem Wasser und aus bei der Elektrolyse gewissermassen als Abfallprodukt entstandenem Sauerstoff, zurück in den Wassertank 14. Ein Gemisch von entstandenem Wasserstoff und Wasser gelangt über eine Wasserstoff/Wasser-Leitung 24 in einen Gas/Flüssigkeits-Separator 26, der den Wasserstoff vom Wasser trennt. Das hierbei gewonnene Wasser gelangt über eine Wasser-Rückführleitung, in welcher ein Ventil 30 angeordnet ist, in den Wassertank 14 zurück. Der im Gas/Flüssigkeits-Separator aus dem Wasserstoff/Wasser abgeschiedene Wasserstoff fliesst über eine erste Wasserstoffleitung 32 in eine Trocknungsvorrichtung 34, wo er vom noch vorhandenen Restwasser befreit beziehungsweise getrocknet wird. Anschliessend gelangt der Wasserstoff durch eine Entfeuchtungseinrichtung 36 und eine weitere Wasserstoffleitung 38, welche ein weiteres, durch einen Drucksensor 42 gesteuertes Ventil 40 enthält, zu einem Wasserstoff-Auslass 44. Eine Zweigleitung 46 der Wasserstoffleitung 38 führt zu einem Überdruck-Sicherheitsventil 48.

Fig. 2 zeigt die Elektrolyse-Zelle 12 in einer schematischen, nichtmassstäblichen Schnittdarstellung. Die funktionell wesentlichen Bestandteile der Elektrolyse-Zelle 12 umfassen eine Membrane 100 und zwei Elektroden, nämlich eine Anode 102 (z.B. als Sauerstoff-Elektrode) und eine Kathode 104 (z.B. als Wasserstoff-Elektrode).

Die Membrane 100 ist ein flexibles Gebilde, das im vorliegenden Fall durch ein Substrat aus einem geeigneten Kunststoff, wie beispielsweise Naflon, und einer auf dem Substrat angebrachten geeigneten Beschichtung, vorzugsweise aus Platin-Iridium, gebildet ist. Diese Beschichtung ist zeichnerisch nicht dargestellt. Die Membrane 100 ist so ausgebildet, dass Wassermoleküle $H_2O$ und Wasserstoffmoleküle $H_2$, jedoch keine Sauerstoffmoleküle $O_2$ durch sie hindurch treten können. In der Elektrolyse-Zelle 12 übernimmt die feuchte Membrane 100 die Funktion des für die Elektrolyse notwendigen Elektrolyten, der bei herkömmlichen Elektrolyse-Verfahren im Allgemeinen durch eine Flüssigkeit mit einer genügenden Zahl freier Anionen und Kationen gebildet ist.

Es sei noch darauf hingewiesen, dass es sehr empfehlenswert ist eine einmal benetzte Membrane 100 stets feucht zu halten. Eine solche Membrane 100 hat nämlich die Tendenz, sich beim Trocknen zu deformieren, insbesondere zu wellen. Die Membrane könnte dadurch reissen oder anderweitig Schaden nehmen. Gemäss Erfindung ist die Membrane 100 aber zwischen den beiden Titanvliesen eingespannt und die Tendenz zur trockenheitsbedingten Verformung ist daher deutlich geringer. Die Lebensdauer der erfindungsgemässen Anordnung ist daher deutlich besser.

Die Anode 102 grenzt nicht direkt an die Fläche der Membrane 100, sondern das anodenseitige Titanvlies 106 befindet sich zwischen der Anode 10 und der Membrane 100. Analog grenzt die Kathode 104 nicht direkt an die Fläche der Membrane 100, sondern das kathodenseitige Titanvlies 106 befindet sich zwischen der Kathode 104 und der Membrane 100.

Die Anode 102 und die Kathode 104 können gleich oder ähnlich ausgebildet sein.

Jede der Elektroden 102, 104, also sowohl die Anode 102 wie auch die Kathode 104, weisen je eine tellerförmige Kontaktseite 102.1, 104.1 auf, die im montierten Zustand planparallel zueinander liegen.

Die Kathode 104 weist auf der Kontaktseite 104.1 mehrere kathodenseitige Kanäle 110, vorzugsweise ringförmig verlaufende Kanäle 110, auf, die mit einem Wasserstoff-Auslass 108 strömungstechnisch verbunden sind, wie in Fig. 3 zu erkennen ist. Diese Kanäle 110 sind in Fig. 2 deutlich zu erkennen, da diese Figur nicht massstäblich gezeichnet ist.

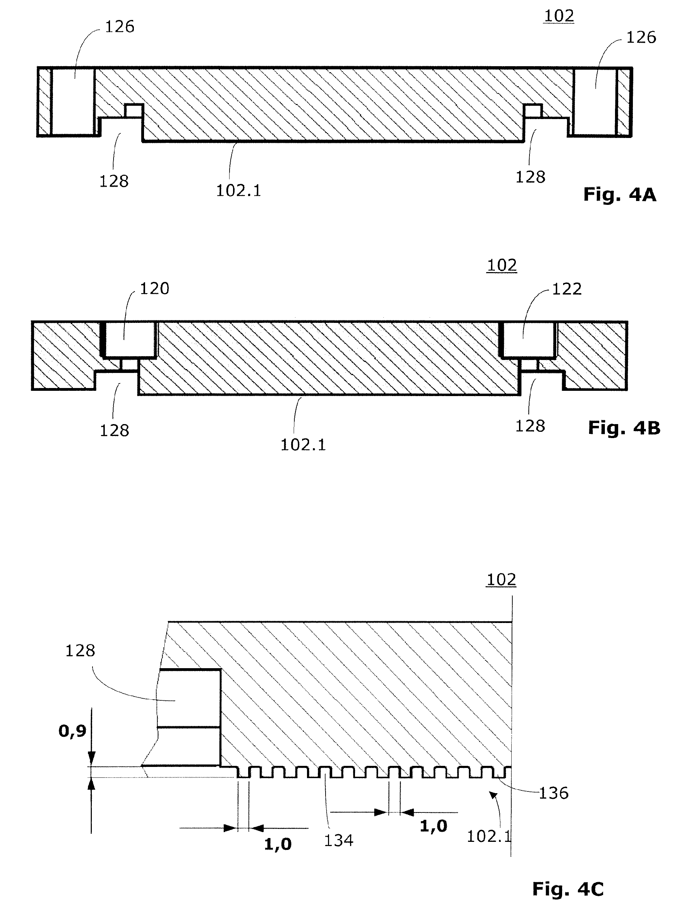

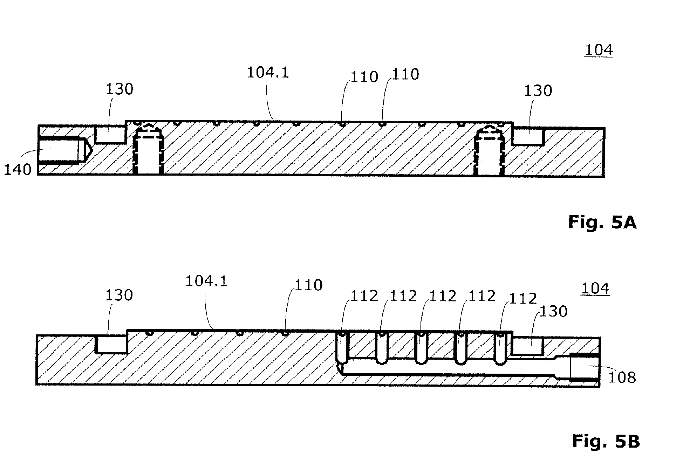

Um die beiden Elektroden 102 und 104 gegeneinander abzudichten, sind Dichtungen 114, 116 vorgesehen, wie in Fig. 2 angedeutet. Vorzugsweise handelt es sich um ringförmige Dichtungen 114, 116, die in entsprechenden ringförmig Nuten 128, 130 verlaufen (siehe Fig. 4A, 4B, 5A, 5B). In Fig. 2 sind diese Dichtungen 114, 116 als schraffierte Flächen hervor gehoben.

In Fig. 3 ist ein Schnitt entlang einer anderen Schnittlinie gezeigt. Dieser Schnitt ist massstäblich. Die Anode 102 umfasst einen Durchbruch 120 für den Wasser-Anschluss und einen Durchbruch 122 für den Sauerstoff/Wasser-Anschluss. Das einströmende Wasser ist durch einen abwärts weisenden Blockpfeil und das ausströmende Fluid (z.B. $O_2$ und Wasser) durch einen nach oben weisenden Blockpfeil angedeutet. Auf der Auslassseite 108 der Kathode 104 wird der Zelle 12 ein weiteres ausströmendes Fluid (z.B. $H_2$ und Wasser) entnommen. Die Durchlässe 120, 122 erstrecken sich im Wesentlichen in axialer Richtung, während der Wasserstoff-Auslass 108 vorzugsweise radial nach aussen verläuft.

Die kathodenseitigen Kanäle 110 sind vorzugsweise über axial verlaufende, kathodenseitige Löcher 112 mit dem radial nach aussen weisenden Wasserstoff-Auslass 108 verbunden. Es handelt sich um eine strömungstechnische Verbindung, die mindestes im Betrieb der Zelle 12 besteht. Die strömungstechnische Verbindung kann (z.B. über ein integriertes Ventil) schaltbar sein.

In den Figuren 4A bis 4D sind Details einer möglichen Anode 102 gezeigt. Fig. 4A zeigt einen ersten Schnitt durch die Anode 102. Am äusseren Rand der tellerförmigen Anode 102 sind Schraubenlöcher (Befestigungslöcher) 126 gezeigt, die sich axial erstrecken und die Anode 102 komplett durchdringen. Vorzugsweise befinden sich mehrere solche Befestigungslöcher 126 entlang des kreisförmigen Umfangs der Anode 102. In Fig. 2 ist zu erkennen, dass Schrauben durch die Befestigungslöcher 126 der Anode 102 hindurch gesteckt werden können, um die Anode 102 mit der Kathode 104 zu verschrauben. Die Kathode weist zu diesem Zweck Schraubenlöcher 132 auf, die vorzugsweise mit Innengewinde versehen sind. Die Schraubenlöcher 132 der Kathode 104 fluchten (decken sich mit) den Befestigungslöchern 126 der Anode 102.

Die Anode weist eine ringförmige konzentrische Nut 128 auf, die ungefähr am äusseren Umfang der Kontaktseite 102.1 der Anode 102 verläuft. In diese Nut 128 kann ein ringförmiger Dichtungsring 114 (siehe zum Beispiel Fig. 2) eingelegt oder eingesteckt werden. Statt eines Dichtungsrings 114 kann auch ein Dichtungskörper verwendet werden, der selbst einen radial nach aussen weisenden Dichtungsring trägt.

In Fig. 4B ist ein Schnitt durch die Anode 102 gezeigt, der durch die beiden Durchbrüche 120, 122 verläuft. In Fig. 4C ist eine Ausschnittsvergrösserung eines Teils der Kontaktseite 102.1 der Anode 102 gezeigt. In dieser vergrösserten Ansicht kann man erkennen, dass die Kontaktseite 102.1 vorzugsweise rillenartigen Ausnehmungen 134 aufweist, die durch Stege 136 getrennt sind. Die rillenartigen Ausnehmungen 134 können parallel und geradlinig nebeneinander verlaufen. Es ist aber auch möglich, dass die Ausnehmungen 134 in zwei Richtungen verlaufen und die Stege 136 dann viereckige, quadratische, rechteckige oder parallelogrammartige Vorsprünge oder Inseln bilden. Die rillenartigen Ausnehmungen 134 begrenzen, zusammen mit dem jeweils anliegenden Bereich des Titanvlieses 106 und der Membrane 100 einen vielarmigen Strömungskanal beziehungsweise eine Vielzahl von Strömungskanälchen und sind so bemessen, dass sie eine Förderung der die Elektrolyse-Zelle 12 durchströmenden Fluide vom Durchbruch 120 zum Durchbruch 122 durch Kapillarwirkung ermöglichen.

Die rillenartigen Ausnehmungen 134 haben vorzugsweise eine Weite von 1 mm und die dazwischen liegenden Stege 136 haben eine Weite auch von 1 mm. Die Höhe der Stege 136 kann z.B. 0,9 mm betragen, wie in Fig. 4C gezeigt.

Die Struktur an der Kontaktseite 102.1 der Anode 102 kann auch in anderer Weise ausgebildet sein, sie muss lediglich zusammen mit der angrenzenden Membranfläche einen für die jeweiligen Fluide und Drücke geeigneten vielarmigen Strömungskanal beziehungsweise eine Vielzahl geeignete Strömungskanälchen bilden.

Die Ausbildung der rillenartigen Ausnehmungen 134 in der Anode 102 ist besonders bevorzugt.

Die Titanfäden aus denen die Titanvliese 106, 108 vorzugsweise aufgebaut sind, haben eine Dicke zwischen 10 und 100 $\mu$m, vorzugsweise zwischen 15 und 25 $\mu$m. Die entsprechenden dünnen "Scheiben" oder "Blätter" aus Titanvlies 106, 108 sind vorzugsweise aus Titanfäden gesintert. Je nach Ausführung des Sinterprozesses, können die Vliese 106, 108 dichter oder weniger dicht komprimiert werden. Umso dichter das Titanmaterial der Vliese 106, 108 komprimiert wird, umso besser wird die Stützwirkung für der Membrane 100. Die Membrane 100 unterliegt somit einer geringeren mechanischen Belastung. Dadurch sind auch höhere Drücke erreichbar ohne die Membrane 100 zu beschädigen.

Die Vliese 106, 108 haben vorzugsweise eine Materialdicke zwischen 0.5 und 1.5mm. Besonders bevorzugt ist eine Materialdicke von 0.9mm. Die Titanfäden werden vorzugsweise aus einer Folie mit 20$\mu$m Dicke geschnitten und dann gepresst und gesintert. Die Vliese 106, 108 haben eine grosse Porosität, die bis ca. 80% betragen kann.

Weist eine Elektrode, im oben beschriebenen Falle die Anode 102, keine Struktur auf, so wird der entsprechende Strömungskanal durch die ebene Kontaktseite 102.1 der Anode 102, das Titanvlies 106 und die Membrane 100 begrenzt.

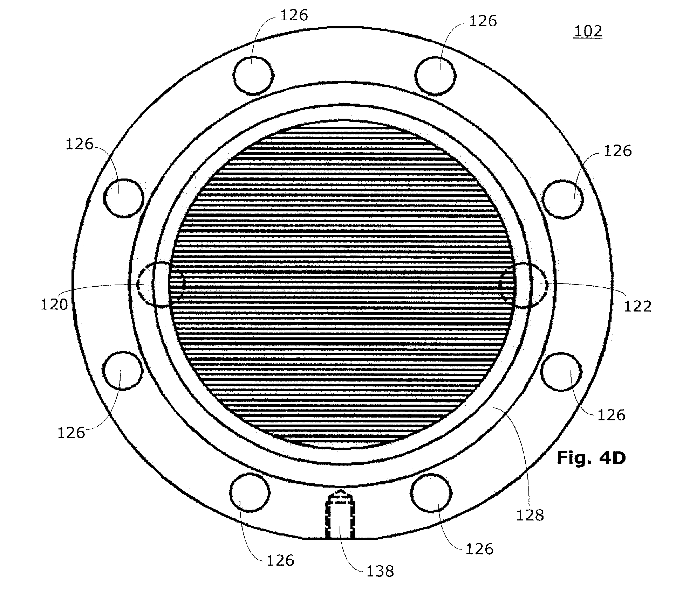

In Fig. 4D ist eine Draufsicht der tellerförmigen Anode 102 gezeigt. In dieser Ansicht sind die im Bereich des Umfangs liegenden Befestigungslöcher 126 zu erkennen. Die ringförmige Nut 128 zur Aufnahme eine Dichtung 114 verläuft konzentrisch zum Mittelpunkt der tellerförmigen Anode 102. Die beiden Durchbrüche 120 und 122 sind andeutungsweise in der 9 Uhr und 3 Uhr Stellung zu erkennen. Die in der Mitte dargestellte, schraffierte Kreisfläche stellt die parallel zueinander verlaufenden Ausnehmungen 134 der Kontaktseite 102.1 einer möglichen Ausführungsform der Erfindung dar. Das anodenseitige Titanvlies 106 wird auf die Kontaktseite 102.1 aufgelegt oder aufgepresst, um eine innige elektrischen und/oder mechanische Verbindung mit der Anode 102 einzugehen. Die Verbindung kann auf Wunsch so hergestellt werden, dass das Titanvlies 106 ein Bestandteil der Anode 102 wird.

Die Dichtung 114 kann mit einer optionalen Madenschraube (nicht gezeigt), die durch ein radiales Schraubenloch 138 mit der Dichtung 114 in Verbindung steht, fixiert werden.

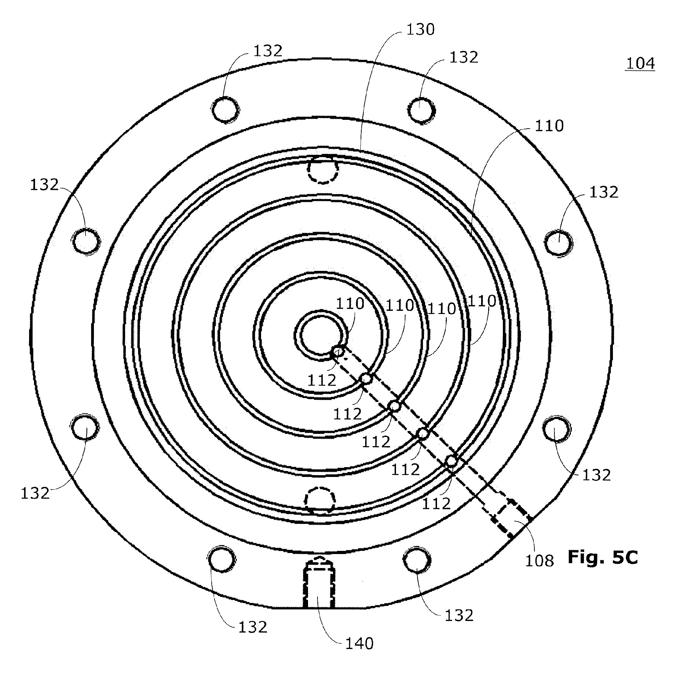

In den Figuren 5A bis 5C sind Details eines möglichen Kathode 104 (Wasserstoff-Elektrode) gezeigt. Fig. 5A zeigt einen ersten Schnitt durch die Kathode 104. Am äusseren Rand der tellerförmigen Kathode 104 sind Schraubenlöcher (Befestigungslöcher) 132 vorgesehen, die sich axial erstrecken und die Kathode 104 komplett durchdringen, wie in Fig. 5C gezeigt. Die Kathode 104 weist eine ringförmig umlaufende Dichtungsnut 130 auf, die zur Aufnahme eines Dichtrings 116 ausgelegt ist. Der Dichtring 116 steht im montierten Zustand vorzugsweise mit der korrespondierenden Dichtung 114 in Wechselwirkung, um die Zelle 12 abzudichten. Der Dichtring 116 kann über eine Madenschraube fixiert werden. Für diese Madenschraube ist ein radiales Schraubenloch 140 vorgesehen.

Die Kontaktfläche 104.1 weist die bereits beschriebenen Kanäle 110, vorzugsweise in Form ringförmig verlaufender Kanäle 110, auf. Diese kathodenseitigen Kanäle 110 sind vorzugsweise über axial verlaufende, kathodenseitige Löcher 112 mit dem radial nach aussen weisenden Wasserstoff-Auslass 108 verbunden, wie in Fig. 5B gezeigt.

In Fig. 5C ist eine Draufsicht der tellerförmigen Kathode 104 gezeigt. In dieser Ansicht sind die im Bereich des Umfangs liegenden Schraubenlöcher 132 zu erkennen. Die ringförmige Nut 130 zur Aufnahme der Dichtung 116 verläuft konzentrisch zum Mittelpunkt der tellerförmigen Kathode 104. Die ringförmig verlaufenden Kanäle 110 sind auch konzentrisch angeordnet und münden in die kathodenseitigen Löcher 112. Der radial nach aussen weisenden Wasserstoff-Auslass 108 ist gestrichelt gezeigt, da er unterhalb der in der Zeichenebene liegenden Kontaktfläche 104.1 liegt.

Das kathodenseitige Titanvlies 108 wird auf die Kontaktseite 104.1 aufgelegt oder aufgepresst, um eine innige elektrischen und/oder mechanische Verbindung mit der Kathode 104 einzugehen. Die Verbindung kann auf Wunsch so hergestellt werden, dass der Titanvlies 108 ein Bestandteil der Kathode 104 wird.

Ein geeignetes Material für die Herstellung der Elektroden 102, 104 ist beispielsweise Titan. Es können aber auch andere Werkstoffe dafür verwendet werden, und es ist auch möglich, nur die Kontaktseiten 102.1, 104.1, beispielsweise mit Titan oder anderen Metallen, zu beschichten. Die Materialien, die für die Kontaktseiten 102.1, 104.1 und die Beschichtung gewählt werden, müssen chemisch resistent sein gegenüber den am Verfahren beteiligten Stoffen und dürfen auch keinen schädigenden Einfluss auf die Membrane 100 haben. Dies gilt für das Material der Kontaktseiten 102.1, 104.1 auch dann, wenn sie beschichtet sind, da es sehr schwierig sein dürfte, eine vollständig porenfreie Beschichtung herzustellen. Die Elektroden 102, 104 können z.B. durch Sinterung hergestellt werden. Die rillenartigen Ausnehmungen 134 und/oder 110 ihrer Kontaktseiten 102.1, 104.1 können durch Elektroerosion oder durch spanabhebende oder chemische Bearbeitung (z.B. Ätzen) hergestellt werden. Es ist noch anzumerken, dass die rillenartigen Ausnehmungen 134 und/oder 110 im Allgemeinen nicht einen genau rechteckigen Kanalquerschnitt aufweisen, sondern leicht gerundet sind.

Es sei im Weiteren darauf hingewiesen, dass auch die Kontaktseite 104.1 der Kathode 104 eine gleiche oder eine andere Struktur aufweisen kann wie die Kontaktseite 102.1 der Anode 102. Bevorzugt ist eine Ausführungsform, bei der die Kontaktseite 102.1 der Anode 102 streifenförmig verlaufende Ausnehmungen 134 und die Kontaktseite 104.1 der Kathode 104 ringförmig verlaufende Kanäle 110 aufweisen.

Die Membrane 100 und die Elektroden 102, 104 der Elektrolyse-Zelle 12 sind vorzugsweise so ausgelegt, dass sie kein eigentliches Gehäuse brauchen. Das Material der Anode 102 und der Kathode 104 und die Form sind so gewählt, dass die beiden Elektroden 102, 104 durch das Zusammenschrauben mit den Schraubverbindungen 124 einen umschlossenen Innenraum (durch die Dichtungen 114, 116 abgeschottet) bilden, wo das Sandwich aus den beiden Vliesen 106, 108 und der Membrane 100 angeordnet ist.

Mit den kreisförmig am äusseren Umfang angeordneten Schraubverbindungen 124 kann die Kathode 104 auf die Membrane 100 und die Anode 102 gleichmässig vorgespannt werden. Durch den hierbei erzeugten hohen Druck erhält man eine einwandfreie und gleichmässige elektrische Kontaktierung, auch bei sehr hohem Nutzungsdruck. Zur Abdichtung sind mehrere Dichtungskörper 114, 116, jedoch keine Dichtungsmassen, vorgesehen.

Der anodenseitige Teil 102 weisen Durchbrüche 120, 122 und der kathodenseitige Teil 104 weist mindestens den Durchbruch 108 als Auslass auf. Die Durchbrüche 120, 122 sind vorzugsweise zur Aufnahme von Schlauch- oder Rohrverbindungen (Steck- oder Schraubverbindungen) ausgelegt. Das gleiche gilt für den Wasserstoff-Auslass 108.

Im Folgenden wird die Wirkungsweise der oben beschriebenen Elektrolyse-Zelle 12 bei der Elektrolyse von Wasser beschrieben. Hierbei wird ein Strom eingeprägt und es liegt zwischen den Elektroden 102, 104 eine Spannung von ca. 1.9V an. Ein erstes Fluid, nämlich Wasser $H_2O$, gelangt gemäss Fig. 1 aus dem Wassertank 14, der oberhalb der Elektrolyse-Zelle 12 angeordnet ist, durch die Wasserzufuhr-Leitung 16 und durch den den Wasser-Anschluss bildenden Durchbruch 120 der Anode 102 in den Bereich zwischen der anodenseitigen Kontaktfläche 102.1 und die Membrane 100. Das Wasser strömt durch die rillenartigen Ausnehmungen 134, falls vorhanden, und benetzt gleichzeitig die Membrane 100, welche im benetzten Zustand und unter elektrischer Spannung ihre Funktion als Elektrolyt übernimmt. Dadurch kann die Elektrolyse beginnen, wobei ein Teil des zugeführten Wassers in das zweite Fluid, nämlich Wasserstoff $H_2$, und das dritte Fluid, nämlich Sauerstoff $O_2$, zerlegt wird. Ein Teil des nicht zerlegten Wassers verbleibt anodenseitig der Membrane 100, sammelt sich mit dem entstandenen Sauerstoff in den rillenartigen Ausnehmungen 134, falls vorhanden, und verlässt die Elektrolyse-Zelle 12 durch den Durchbruch 122 beziehungsweise den dortigen Sauerstoff/Wasser-Anschluss. Dieses Sauerstoff/Wasser-Gemisch fliesst schliesslich gemäss Fig. 1 über die Sauerstoff/Wasser-Rückführ-Leitung 22 drucklos in den Wassertank 14 zurück. Der Rest des nicht zerlegten Wassers gelangt zusammen mit dem entstandenen Wasserstoff durch die Membrane 100 auf die Kathodenseite der Membrane 100 und zum Wasserstoff/Wasser-Anschluss 108, wobei im vorliegenden Fall mit einem Wasserstoffmolekül $H_2$ jeweils auch einige Wassermoleküle $H_2O$ auf die Kathodenseite der Membrane 100 wandern. Dieses Wasserstoff/Wasser-Gemisch strömt dann durch den Auslass 108 gemäss Fig. 1 durch die Wasserstoff/WasserLeitung 24 in die weiteren Teile der Anlage 10, wo sich nun gemäss Voreinstellung ein Druck aufbaut.

Wie schon erwähnt, kann sich das eben beschriebene Verfahren auch in umgekehrter Weise abspielen; aus Wasserstoff und Sauerstoff entsteht dabei Wasser. Das entstehende Wasser wird der dann als Brennstoff-Zelle wirkenden Zelle 12 anodenseitig der Membrane 100 entnommen, und zwischen der Anode 102 und der Kathode 104 kann eine elektrische Spannung abgegriffen werden.

Zum Schluss sei noch darauf hingewiesen, dass die Elektrolyse-Zelle 12 nach der Erfindung nicht nur für die oben beschriebene Elektrolyse von Wasser und die umgekehrt verlaufende Reaktion sondern bei geeigneter Dimensionierung und Materialauswahl auch für entsprechende Elektrolysen beziehungsweise umgekehrte Reaktionen mit anderen Stoffen eingesetzt werden kann.

Bezugszeichenliste:

| | |
|---|---|
| Anlage | 10 |
| Elektrolyse- beziehungsweise Brennstoff-Zelle | 12 |
| Wassertank | 14 |
| Wasser-Zufuhrleitung | 16 |
| Zweigleitung | 18 |

| | |
|---|---|
| Drainage-Öffnung | 20 |
| Sauerstoff/Wasser-Rückführleitung | 22 |
| Wasserstoff/Wasser-Leitung | 24 |
| Gas/Flüssigkeits-Separator | 26 |
| Ventil | 30 |
| erste Wasserstoffleitung | 32 |
| Trocknungsvorrichtung | 34 |
| Entfeuchtungseinrichtung | 36 |
| weitere Wasserstoffleitung | 38 |
| Ventil | 40 |
| Drucksensor | 42 |
| Wasserstoff-Auslass | 44 |
| Zweigleitung | 46 |
| Überdruck-Sicherheitsventil | 48 |
| Membrane | 100 |
| Anode | 102 |
| Kathode | 104 |
| anodenseitiges Titanvlies | 106 |
| kathodenseitiges Titanvlies | 108 |
| ringförmig verlaufende Kanäle | 110 |
| axial verlaufenden Löcher | 112 |
| 1. Dichtung | 114 |
| 2. Dichtung | 116 |
| Wasserstoff-Auslass der Zelle 12 | 118 |
| Wasser-Anschluss | 120 |
| Sauerstoff/Wasser-Anschluss | 122 |
| Schraubverbindung | 124 |
| Anodenseitige Befestigungslöcher | 126 |
| 1. Aufnahmeschlitz für Dichtung | 128 |
| 2. Aufnahmeschlitz für Dichtung | 130 |
| kathodenseitige Befestigungslöcher | 132 |
| rillenartigen Ausnehmungen | 134 |
| Stege | 136 |
| radiales Schraubenloch | 138 |
| radiales Schraubenloch | 140 |

**Patentansprüche**

1. Elektrolyse- beziehungsweise Brennstoff-Zelle (12), umfassend

- eine Anode (102),
- eine Kathode (104), und
- eine Membrane (100), die zwischen der Anode (102) und der Kathode (104) angeordnet ist,

**dadurch gekennzeichnet, dass**

- die Anode (102) ein anodenseitiges Titanvlies (106) aufweist, das auf einer Kontaktseite (102.1) der Anode (102) angeordnet ist,
- die Kathode (104) ein kathodenseitiges Titanvlies (108) aufweist, das auf einer Kontaktseite (104.1) der Kathode (104) angeordnet ist,

wobei die Membrane (100) zwischen den beiden Titanvliesen (106, 108) angeordnet, das anodenseitige Titanvlies (106) elektrisch leitend mit der Kontaktseite (102.1) der Anode (102) und das kathodenseitige Titanvlies (108) elektrisch leitend mit der Kontaktseite (104.1) der Kathode (104) verbunden sind.

2. Elektrolyse- beziehungsweise Brennstoff-Zelle (12) nach Anspruch 1, **dadurch gekennzeichnet, dass** die Titanvliese (106, 108) Titanfäden umfassen, wobei die Titanvliese (106, 108) vorzugsweise eine Tellerform aufweisen, deren Durchmesser in etwa dem Durchmesser der Kontaktseiten (102.1, 104.1) entspricht.

3.  Elektrolyse- beziehungsweise Brennstoff-Zelle (12) nach Anspruch 2, **dadurch gekennzeichnet, dass** die Titanfäden eine Dicke zwischen 10 und 100 $\mu$m, vorzugsweise zwischen 15 und 25 $\mu$m, aufweisen.

4.  Elektrolyse- beziehungsweise Brennstoff-Zelle (12) nach Anspruch 2, **dadurch gekennzeichnet, dass** die Titanvliese (106, 108) aus Titanfäden gesintert sind.

5.  Elektrolyse- beziehungsweise Brennstoff-Zelle (12) nach einem der vorhergehenden Ansprüche 1 bis 4, **dadurch gekennzeichnet, dass** die Kathode (104) kathodenseitige Kanäle (110), vorzugsweise ringförmig verlaufende Kanäle (110), auf der Kontaktseite (104.1) der Kathode (104) aufweist, die mit einem Wasserstoff-Auslass (108) strömungstechnisch verbunden sind.

6.  Elektrolyse- beziehungsweise Brennstoff-Zelle (12) nach Anspruch 5, **dadurch gekennzeichnet, dass** die Kanäle (110) mit axial verlaufenden Löchern (112) verbunden sind, die in der Kathode (104) ausgebildet sind, um als strömungstechnische Verbindung zum Wasserstoff-Auslass (108) zu dienen.

7.  Elektrolyse- beziehungsweise Brennstoff-Zelle (12) nach einem der vorhergehenden Ansprüche 1 bis 6, **dadurch gekennzeichnet, dass** die Membrane (100) für den Durchtritt eines ersten Fluids, insbesondere Wasser ($H_2O$) und den Durchtritt eines zweiten Fluids, insbesondere Wasserstoff ($H_2$), jedoch nicht für den Durchtritt eines dritten Fluids, insbesondere Sauerstoff ($O_2$), ausgebildet ist.

8.  Elektrolyse- beziehungsweise Brennstoff-Zelle (12) nach einem der vorhergehenden Ansprüche 1 bis 7, **dadurch gekennzeichnet, dass** die Anode (102) und die Kathode (104) ein mit Schraubverbindungen (124) zusammenspannbares Gehäuse mit dazwischen liegenden Dichtungen (114, 116) bilden.

9.  Elektrolyse- beziehungsweise Brennstoff-Zelle (12) nach einem der vorhergehenden Ansprüche 1 bis 8, **dadurch gekennzeichnet,**

    - **dass** die Anode (102) einen ersten Anschluss (120) für das erste Fluid, insbesondere einen Wasser-Anschluss (120), und einen zweiten Anschluss (122) für das dritte Fluid, insbesondere einen Sauerstoff/Wasser-Anschluss (122), aufweist, wobei zwischen dem ersten Anschluss und dem zweiten Anschluss ein durch die anodenseitige Kontaktseite (102.1) und die Membrane (100) begrenzter Strömungskanal gebildet ist, der zur Durchströmung unter Druck und/oder durch Kapillarwirkung bestimmt ist, und
    - **dass** die Kathode (104) einen Wasserstoff-Auslass (108) für das zweite Fluid, insbesondere einen Wasserstoff/ Wasser-Anschluss (108), aufweist,

    wobei zwischen der Membrane (100) und dem Wasserstoff-Auslass (108) ein durch die kathodenseitige Kontaktseite (104.1) und die Membrane (100) begrenzter Strömungskanal gebildet ist, der zur Durchströmung unter Druck und/ oder durch Kapillarwirkung bestimmt ist.

10. Elektrolyse- beziehungsweise Brennstoff-Zelle (12) nach einem der vorhergehenden Ansprüche 1 bis 9, **dadurch gekennzeichnet, dass** durch die Titanvliese (106, 108) eine Kapillarstruktur ausgebildet ist, welche unter Kapillar-wirkung von einem Fluid ($H_2O$ $H_2$, $O_2$) durchströmbare Strömungskanäle bilden.

11. Elektrolyse- beziehungsweise Brennstoff-Zelle (12) nach einem der vorhergehenden Ansprüche 1 bis 10, **dadurch gekennzeichnet, dass** auf der Kontaktseite (102.1) der Anode (102) rillenartige Ausnehmungen (134) gebildet sind, welche unter Kapillarwirkung von einem Fluid ($H_2O$ $O_2$) durchströmbare Strömungskanäle bilden.

12. Verwendung der Elektrolyse- beziehungsweise Brennstoff-Zelle (12) nach mindestens einem der Ansprüche 1 bis 11 als Elektrolyse-Zelle zur Generierung von Wasserstoff ($H_2$), **dadurch gekennzeichnet,**

    - **dass** zwischen der Anode (102) und der Kathode (104) eine elektrische Spannung angelegt wird, und
    - **dass** der Elektrolyse-Zelle (12) anodenseitig der Membrane (100) Wasser zugeführt und Sauerstoff beziehungsweise ein Sauerstoff/WasserGemisch entnommen, sowie kathodenseitig der Membrane (100) Wasserstoff beziehungsweise ein Wasserstoff/Wasser-Gemisch entnommen wird.

13. Verwendung der Elektrolyse- beziehungsweise Brennstoff-Zelle (12) nach mindestens einem der Ansprüche 1 bis 7 als Brennstoff-Zelle zur Generierung einer elektrischen Spannung, **dadurch gekennzeichnet,**

- **dass** Mittel vorgesehen sind, um die Membrane (100) zu benetzen,
- **dass** der Brennstoff-Zelle (12) anodenseitig der Membrane (100) mindestens Sauerstoff zugeführt und Wasser entnommen wird,
- **dass** der Brennstoff-Zelle (12) kathodenseitig der Membrane (100) mindestens Wasserstoff zugeführt wird, und
- **dass** zwischen Anode (102) und Kathode (104) eine elektrische Spannung abgegriffen wird.

**Fig. 1**

**Fig. 2**

**Fig. 3**

Fig. 4A

Fig. 4B

Fig. 4C

**Fig. 4D**

Fig. 5A

Fig. 5B

**Fig. 5C**

Europäisches
Patentamt

European
Patent Office

Office européen
des brevets

## EUROPÄISCHER RECHERCHENBERICHT

**Nummer der Anmeldung**

EP 09 17 2385

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 777 323 A (LYNNTECH INC [US]) 25. April 2007 (2007-04-25) * Zusammenfassung; Abbildungen 1-24 * * Absätze [0010], [0054] - [0056] * ----- | 1-13 | INV. H01M8/02 H01M8/10 C25B1/08 H01M8/18 |
| X | US 2008/067061 A1 (ZUBER RALF [DE] ET AL) 20. März 2008 (2008-03-20) * Zusammenfassung * * Absätze [0026], [0040] * ----- | 1 | ADD. H01M4/86 |
| X | JP 2004 134135 A (NAT INST OF ADV IND & TECHNOL; DAIKI ENGINEERING KK) 30. April 2004 (2004-04-30) * Zusammenfassung; Abbildungen 1-6 * * Absatz [0007] * ----- | 1 | |
| A,D | EP 1 077 499 A (SCHMIDLIN LABOR & SERVICE AG [CH]) 21. Februar 2001 (2001-02-21) * das ganze Dokument * ----- | 1-13 | |

|  |
|---|
| RECHERCHIERTE SACHGEBIETE (IPC) |
| H01M C25B |

Der vorliegende Recherchenbericht wurde für alle Patentansprüche erstellt

| Recherchenort | Abschlußdatum der Recherche | Prüfer |
|---|---|---|
| Den Haag | 17. November 2009 | Chmela, Emil |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 17 2385

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-11-2009

| Im Recherchenbericht angeführtes Patentdokument | | Datum der Veröffentlichung | Mitglied(er) der Patentfamilie | Datum der Veröffentlichung |
|---|---|---|---|---|
| EP 1777323 | A | 25-04-2007 | KEINE | |
| US 2008067061 | A1 | 20-03-2008 | KEINE | |
| JP 2004134135 | A | 30-04-2004 | KEINE | |
| EP 1077499 | A | 21-02-2001 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1077499 A